# EUROPEAN PATENT APPLICATION

(11) **EP 0 710 631 A1**
(43) Date of publication of application: **08.05.1996**
(21) Application number: 95307779.9
(22) Date of filing: 01.11.1995
(51) Int. Cl.: C03C 25/02, C03B 37/04, C03B 37/075

(54) **Method for manufacturing a dual-component mineral fiber product**

(30) Priority: 03.11.1994 US 19940333819
(71) Applicant: OWENS-CORNING FIBERGLAS CORPORATION, Toledo, Ohio 43659 (US)
(72) Inventor: Aschenbeck, David P., Newark, Ohio 43055 (US); Houpt, Ronald A., Newark, Ohio 43055 (US); Powers, Timothy A., Newark, Ohio 43055 (US); Berdan, Clark, II, Granville, Ohio 43023 (US); Alkire, Roberta L., Millersport, Ohio 43046 (US); Grant, Larry J., Westerville, Ohio 43082 (US)
(74) Representative: West, Alan Harry, et al

(57) **Abstract**

A method for making dual-glass fiber products includes supplying a spinner (14,60) with two streams (78,80) of molten mineral material (A,B) of distinct compositions, centrifuging dual-glass fibers (18,68) from the spinner (14,60), applying a small amount (0.01 to 1.5% out) of lubricant (77) to the dual-glass fibers (18,68), collecting the dual-glass fibers (18,76) as a dual-glass fiber product (20,30,48,110), and packaging the dual-glass fiber product (30,48,110), where the packaging step comprises rolling (24,26,28) the dual-glass fiber product (48,110) into a rolled package (30,150), where the rolling step causes a repeated compression and release of portions of the dual-glass fiber product (48,110). The small amount of lubricant (77) enables substantial recovery in product density after rolling even in the absense of a binder.

## Description

This invention relates to the manufacture of mineral fibers and mineral fiber products. The invention also pertains to the manufacture of the insulation products of glass fibers particularly by a rotary fiberizing process.

Small diameter glass fibers are useful in a variety of applications including acoustical or thermal insulation materials. When these small diameter glass fibers are properly assembled into a lattice or web, commonly called a wool pack, glass fibers which individually lack strength or stiffness can be formed into a product which is quite strong. The glass fiber insulation which is produced is lightweight, highly compressible, and resilient. For purposes of this patent specification, in using the terms "glass fibers" and "glass compositions", "glass" is intended to include any of the glassy mineral materials, such as rock, slag, and basalt, as well as traditional glasses.

Prior art methods for producing glass fiber insulation products involve producing glass fibers from a rotary process. A single molten glass composition is forced through the orifices in the outer wall of a centrifuge or spinner, producing primarily straight glass fibers. The fibers are drawn downward by a blower. The binder required to bond the fibers into a wool product is sprayed onto the fibers as they are drawn downward. The fibers are then collected and formed into a wool pack.

When forming insulation products of glass fibers, the ideal insulation would have uniform spacing between the fibers. Insulation is basically a lattice for trapping air between the fibers and thus preventing movement of air. The lattice also retards heat transfer by scattering radiation. A more uniform spacing of fibers would maximize scattering and, therefore, would have greater insulating capability.

In the production of wool insulating materials of glass fibers, it becomes necessary to use fibers that are relatively short. For purposes of this specification, short fibers are intended to include fibers approximately 25.4 mm (1 inch) and less, while long fibers are intended to include fibers longer than approximately 50.8 mm (2 inches). Long fibers tend to become entangled with each other forming ropes or strings. These ropes create a deviation from the ideal uniform lattice and reduce the insulating abilities of the glass wool. However, short fibers that are straight form only a haphazard lattice, and some of the fibers lie bunched together. It is clearthat existing glass wool insulating materials have significant nonuniformities in the distribution of fibers within the product. Thus, the ideal uniform lattice structure cannot be achieved.

Additionally, when using straight fibers it is necessary to add an organic binder material to the fibers. The binder is required to hold the product together by bonding at the fiber-to-fiber intersections. Not only is the binder itself expensive, but great pains must be taken to process effluent from the production process due to the negative environmental impact of most organic compounds. Further, the binder must be cured with an oven using additional energy and creating additional environmental cleanup costs.

Another problem with existing insulation products is that some of the glass fibers irritate human skin upon contact, particularly if the fibers are too large in diameter. Also, if the glass fibers are fragile, breakage of the fibers can cause the insulation products to be dusty.

In the shipping and packaging of insulation products, high compressibility is preferred. It is desirable to compress the wool for shipping and then have it recover rapidly and reliably to the desired thickness and density. Current insulation products are limited in the amount of compression possible while still attaining adequate recovery. When the product is compressed, the binder holds firm while the fibers themselves flex. As the stress upon the fiber increases due to excessive compression, the fiber breaks.

A process for making a dual-glass fiber product is disclosed in copending U.S. Patent Application Serial No. 08/148,098, filed November 5, 1993, naming Houpt, et al. as inventors. The Houpt, et al. patent application is assigned to the assignee of this patent application, and is hereby incorporated by reference. The Houpt, et al. application discloses manufacturing dual-glass fiber insulation products by feeding two streams of different compositions of molten glass to a rotating spinner, and maintaining the two molten glasses separate until finally joining at the spinner peripheral wall. The two glasses have different coefficients of thermal expansion, and the resulting glass fiber has an irregular rotation or shape, providing significantly increased thermal, recovery, and handling qualities when compared to straight glass fibers. By employing fibers that are irregular, rather than straight, kinked, or even curly, a more uniform lattice structure can be achieved. This is referred to as uniform volume filling. The greater entanglement of irregularly shaped fibers enables sufficient wool pack integrity without the use of an organic binder. However, if so desired, a binder material may be added to provide additional strength to the wool insulating material.

The dual-glass fibers and insulation products made of those fibers are preferably packaged by rolling up into an insulation roll. Apparatus for rolling up a dual-glass fiber product is disclosed in copending U.S. Patent Application Serial No. 08/309,710, filed September 21, 1994, naming Nagy, et al. as inventors. The Nagy, et al. patent application is assigned to the assignee of this patent application, and is hereby incorporated by reference. The Nagy, et al. application discloses a method for packaging compressible insulation material comprising rolling up the insulation material on a mandrel to form an insulation roll, applying pressure on the insulation material, during the rolling of the insulation material, with a pair of opposed traveling belts which are adapted to contact the roll being formed with an increasing area of contact as the diameter of the roll increases, and increasing the tension on the belts as the diameter of the roll increases in order to maintain a substantially constant pressure on the insulation material. The method of Nagy, et al. enables rolling packages of insulation to higher compressed densities than previously used for commercial light-density insulation products.

The method disclosed in the Nagy, et al. application has some practical limitations, however. Dual-glass fiber insulation products packaged using the Nagy, et al. method sometimes exhibit poor recovery characteristics and other forms of product damage. Product damage includes poor, i.e., excessively high, recovered product densities, and evidence of numerous tufts of fibers, indicative of short fibers not distancing themselves from neighboring fibers. Many of the fibers appear to be very short, and tactile handling of the fibers show that the fibers were brashy to the touch. The exact reason for the poor recovery and product damage is not known, but it is believed that the cause may be due to the fact that the packaging method includes subjecting portions of the insulation product to a repeated compression and release of compression, and possibly also because the insulation product is subjected to shear forces while the insulation is under compression.

Accordingly, a need exists for an improved method for manufacturing and packaging dual-glass fiber products, particularly a method which will enable dual-glass fiber products to be packaged at high package densities while exhibiting good recovery and good product characteristics after recovery

There has now been discovered a method for manufacturing and packaging dual-glass fiber products which enables packaging these products at high package densities, and yet provides good recovery and good product characteristics after recovery. More specifically, it has been found that the use of a lubricant on the dual-glass fibers enables the dual-glass fiber products to be rolled up to high compression densities without significantly adversely affecting the post-recovery product density or other product characteristics. Even more surprising, however, is the small amount of lubricant which is required to obtain a dramatic increase in product properties. Lubricant amounts as small as 0.03 weight percent have shown beneficial changes of at least 33 percent in recovery properties.

According to this invention, there is provided a method for making dual-glass fiber products comprising supplying a spinner with two streams of molten mineral material of distinct compositions, centrifuging dual-glass fibers from the spinner, applying a lubricant to the dual-glass fibers, collecting the dual-glass fibers as a dual-glass fiber product, and packaging the dual-glass fiber product. The lubricant is preferably applied in an amount within the range of about 0.01 to about 1.5 percent, and most preferably in an amount within the range of about 0.01 to about 0.7 percent. For purposes of this specification, all percentages given are in terms of weight percent, which is the percent of the total weight of the dual-glass fibers and the lubricant.

In a specific embodiment of the invention, the packaging step comprises rolling the dual-glass fiber product into a rolled package. Specifically, the dual-glass fiber product can have a compressed density in the rolled up condition within the range of from about 6 to about 18 pounds per square foot (pcf) (96 to 288 kg/m³), and yet still provide a density within the range of from about 0.3 to about 0.6 pcf(4.8 to 9.6 kg/m³) for the dual-glass fiber product when it is released from the rolled package. More preferably, the dual-glass fiber product can be compressed to a density within the range of from about 9 to about 18 pcf(144 to 288 kg/m³) while still maintaining good product qualities.

In a specific embodiment of the invention, the method of manufacturing dual-glass fibers is accomplished in the absence of a step for applying a binder.
Figure 1 is a schematic view in elevation of apparatus for making dual-glass fiber products according to the method of the present invention.
Figure 2 is a schematic view in perspective of a direct formed process by which the dual-glass fiber products produced by the present invention may be collected.
Figure 3 is a schematic view in perspective of an insulation product produced according to the present invention.
Figure 4 is a cross-sectional view in elevation of a fiberizer by which the fibers of the present invention may be produced.
Figure 5 is a plan view of a portion of the spinner of Figure 4, taken along line 5-5.
Figure 6 is a schematic cross-sectional view in elevation of apparatus for packaging compressible insulation material made according to the method of this invention.
Figure 7 is a view similar to Figure 6, in which the insulation material is being rolled up.
Figure 8 is a view similar to Figure 7, in which the insulation roll is nearly completed.
Figure 9 is a schematic view in elevation of the mandrel of the apparatus shown in Figure 6.

The invention will be described with reference to the manufacture of irregularly shaped dual-glass fibers and insulation products made from those fibers. It is to be understood that the method of the invention is also applicable to straight fibers, and that the invention can apply equally to other mineral fiber materials.

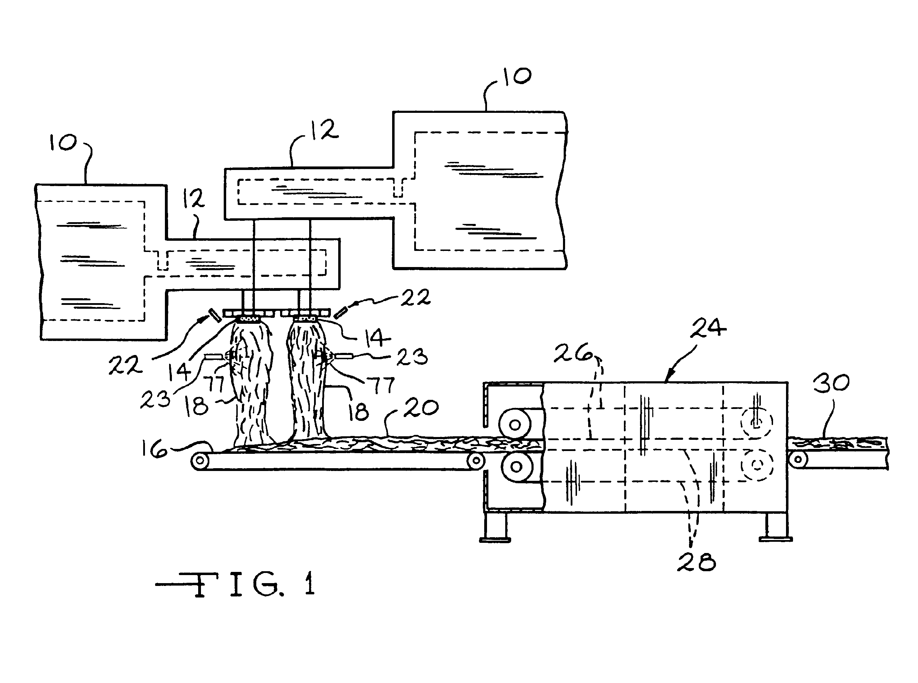

Referring to Figure 1, it can be seen that two distinct molten glass compositions are supplied from furnaces 10 via forehearths 12 to fiberizers 14. Veils of irregularly shaped dual-glass fibers 18 produced by the fiberizers are collected on conveyor 16 as a dual-glass fiber product, such as wool pack 20 by means of a vacuum positioned beneath the conveyor. As the fibers are blown downward by air or gases to the conveyor by means of blowers 22 in the fiberizers, they are attenuated and assume their irregular shape. A plurality of nozzles 23 are mounted to spray lubricant into the veil of dual-glass fibers. The nozzles are supplied with lubricant from a source, not shown. The nozzles can be of any suitable type for introducing the lubricant to the dual-glass fibers, such as a liquid pressure nozzle commonly used to apply binder materials to fiberglass insulation products.

The wool pack can then optionally be passed through oven 24 for a heat setting process. While passing through the oven, the wool pack is shaped by top conveyor 26 and bottom conveyor 28, and by edge guides, not shown. Other fabrication techniques for fabricating the insulation product 30 include stitching, needling, hydro- entanglement, and encapsulation.

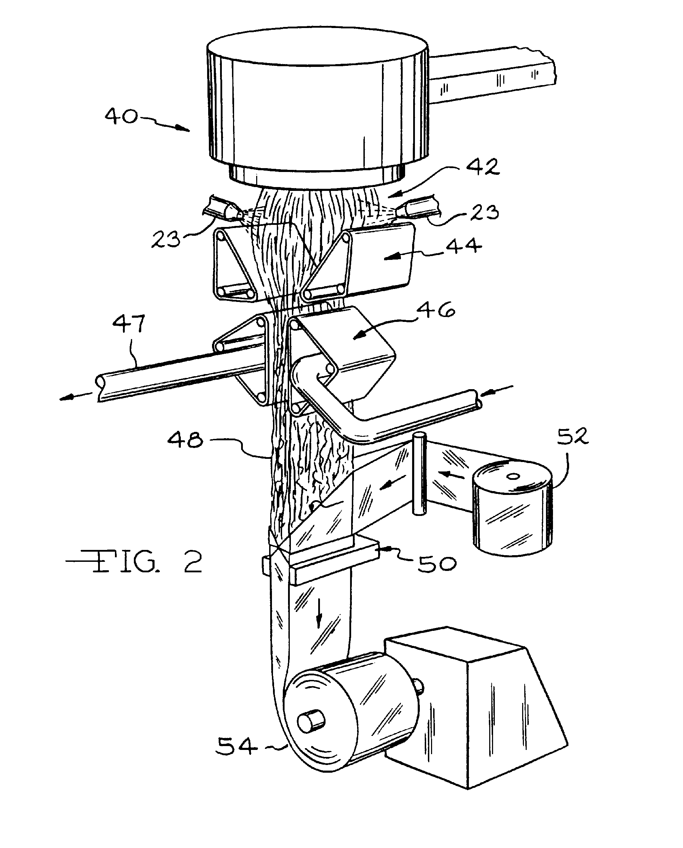

Referring to Figure 2, there is shown a direct forming process through which insulation products made by the method of the present invention may be collected. Irregularly shaped dual-glass fibers are produced in fiberizer 40. Veils 42 of glass fibers are blown downward by means of blowers in the fiberizer and are collected at temperatures of up to 1100°F (593°C) on opposed, downwardly converging collection conveyors 44. The collected fibers optionally can be passed through a heat-setting oven, such as pack formation and heat setting conveyors 46, where the fibers are shaped into an insulation product at temperatures within the range of from about 700°F to about 1100°F (371 to 593°C). The heat setting oven, or heat setting conveyors, preferably define a predetermined cross-sectional shape. The heat for heat setting the fibers in the oven can be supplied by any suitable means, such as by hot air ducts 47, connected to a supply of hot gases, not shown, which are adapted to pass heated gases transversely through the wool pack 48.

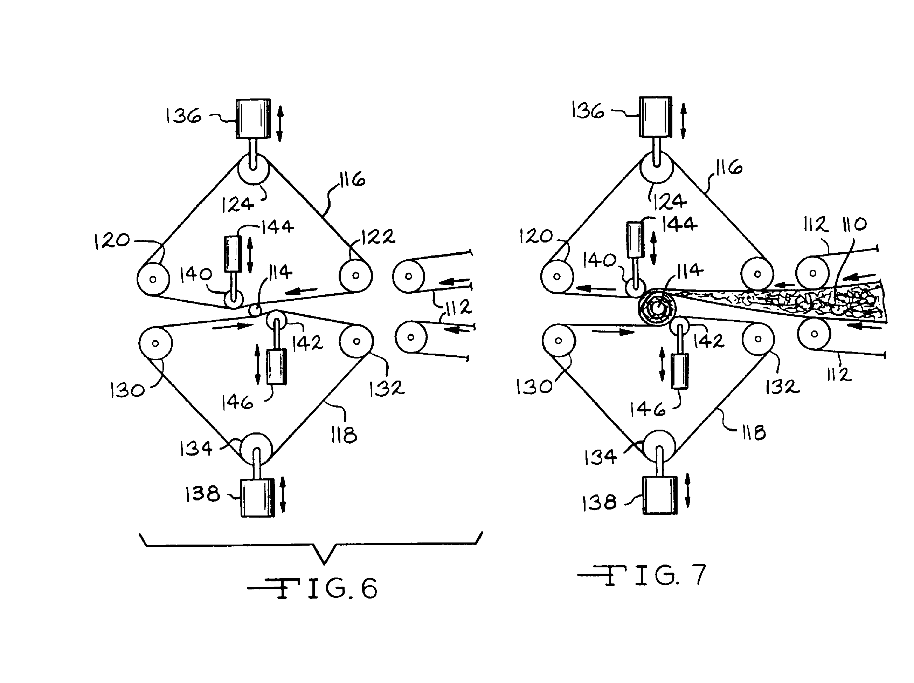

Subsequently, the insulation product is passed to encapsulation module 50 where the insulation product can be encapsulated with any suitable type of film, such as film 52. Further, the moving product can be cut into individual units, such as insulation batts, prior to packaging. The product can be packaged by any suitable means, such as roll up apparatus 54, shown schematically, and described in more detail with reference to Figures 6 through 9.

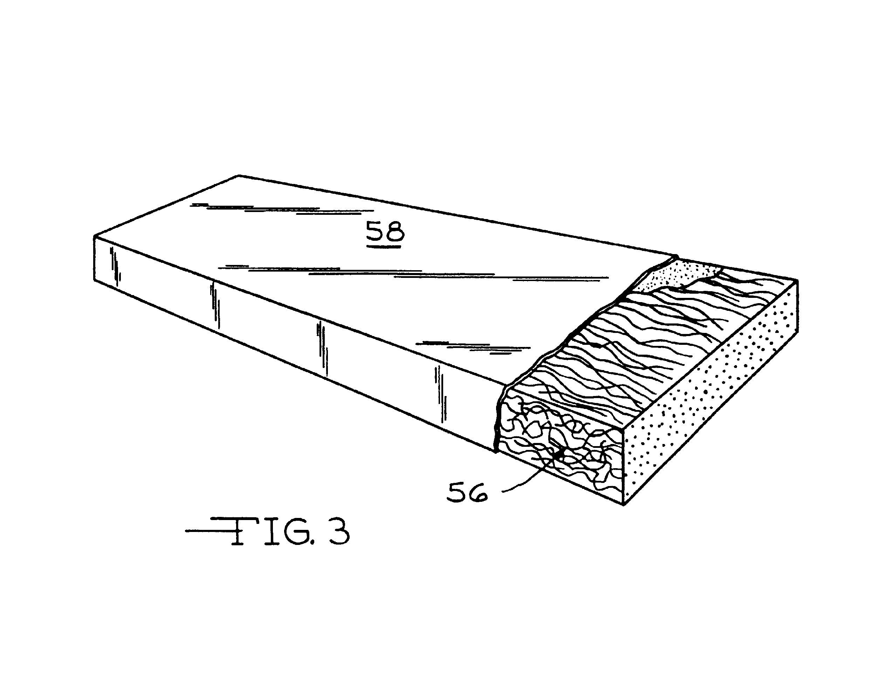

Referring to Figure 3, the insulation product produced by the present invention can be in the form of wool batt 56 consisting of irregularly shaped dual-glass fibers. The batt can be covered by an exterior facing 58, many types of which are known in the prior art.

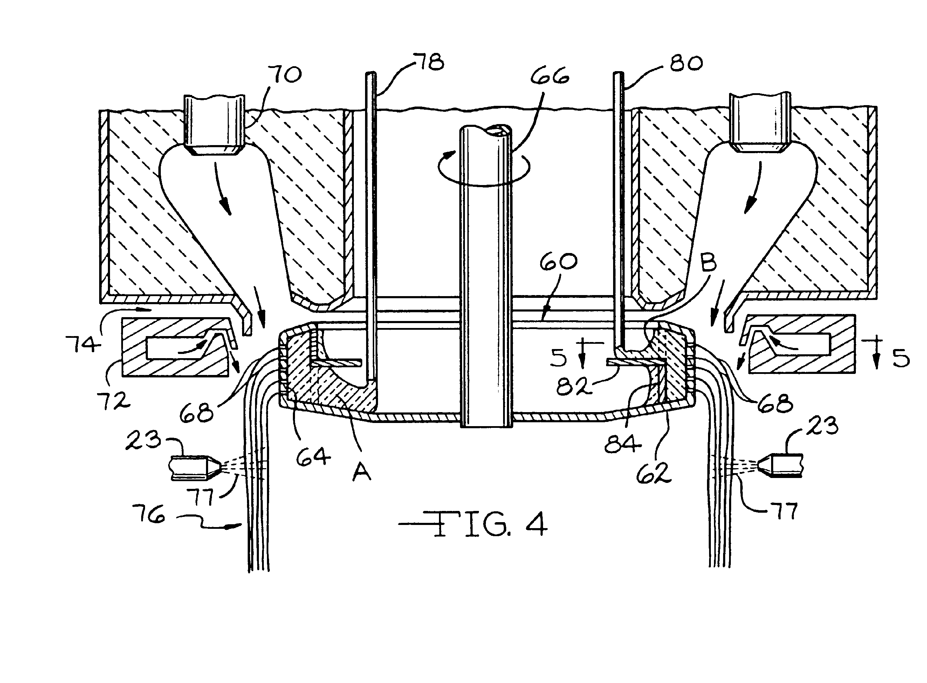

As shown in Figure 4, spinner 60 is comprised of spinner bottom wall 62 and spinner peripheral wall 64. The spinner is rotated on spindle 66, as is known in the prior art. The rotation of the spinner centrifuges molten glass through the spinner peripheral wall into primary fibers 68. The primary fibers are maintained in a soft, attenuable condition by the heat of annular burner 70. In one embodiment of the invention, an internal burner, not shown, provides heat to the interior of the spinner. Annular blower 72, using induced air 74, is positioned to pull the primary fibers and further attenuate them into secondary fibers 76, suitable for use in wool insulating materials. The secondary fibers, or dual-glass irregularly shaped glass fibers, are then collected for formation into a wool pack.

Nozzles 23 are positioned next to the veil of fibers to spray lubricant 77 onto the dual-glass fibers in the veil. Preferably, the nozzles are positioned sufficiently high to obtain good lubricant distribution on the dual-glass fibers, but not so close to the fiberizer as to cause ignition or excessive vaporization of the lubricant. The lubricant can be of any type suitable to give the dual-glass fibers an ability to slip relative to one another during the compression steps of the product packaging process. A preferred lubricant is Emerlube 7440, a mineral oil product from Emery Chemicals, Cincinnati, Ohio. Other lubricants, such as other mineral oils, petroleum derived oils, silicones, and soaps could also possibly be used as lubricants for the invention.

Preferably, the lubricant selected will have minimal or no adverse environmental impact or potential for harmful health effects, even when exposed to heat or fire. Further, the lubricant should not be susceptible to mold growth, nor attractive to animals. Also, the lubricant should not produce unpleasant odors, and should be easy to process through the nozzles and conduits without extensive cleaning. The lubricant should not be corrosive, and should not be overly hydroscopic so as to avoid humidity-related fiber strength or recovery problems. The lubricant preferably will be low cost.

The amount of lubricant applied to the dual-glass fibers will depend on the ability of the lubricant to enable the fibers to slip relative to each other in a beneficial way. In general, the lubricant will be applied in an amount within the range of about 0.01 to about 1.5 percent. More preferably, the lubricant is applied in an amount within the range of about 0.01 to about 0.7 percent. The preferred amount of the Emerlube 7440 is within the range of from about 0.01 to about 0.07 percent, and preferably 0.03 percent. Excessive lubricant will cause excessive slipping of the dual-glass fibers, making the product relatively unmanageable and difficult to fabricate.

The interior of the spinner is supplied with two separate streams of molten glass, first stream 78 containing glass A and second stream 80 containing glass B. The glass in stream 78 drops directly onto the spinner bottom wall and flows outwardly with centrifugal force toward the spinner peripheral wall to form a head of glass A. Glass B in molten glass stream 80 is positioned closer to the spinner peripheral wall than stream 78, and the glass in stream 80 is intercepted by horizontal flange 82 before it can reach the spinner bottom wall. Thus, a build-up or head of glass B is formed above the horizontal flange. The two glasses can be wool glasses having different coefficients of thermal expansion. For example, one of the glasses can be a wool glass with a high amount of boron and little soda, while the other glass is a wool glass with a high amount of soda and a little boron.

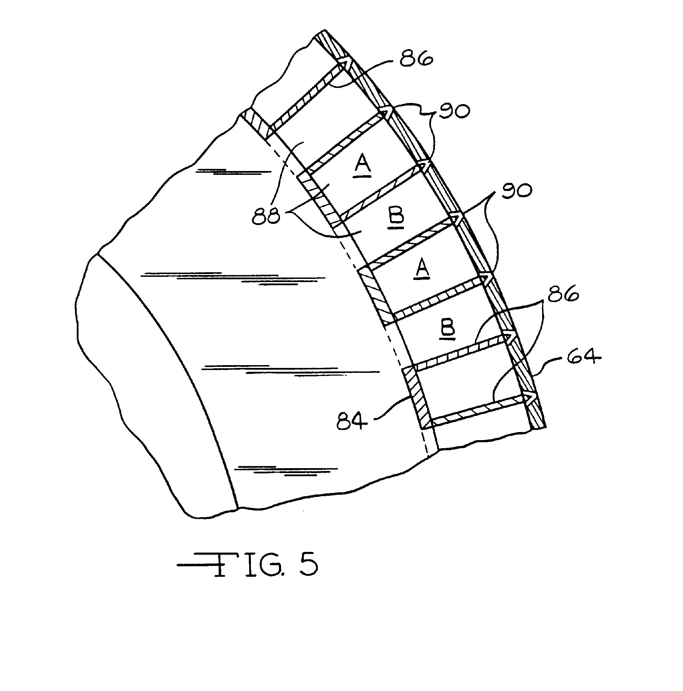

As shown in Figure 5, the spinner is adapted with vertical interior wall 84 which is generally circumferential and positioned radially inwardly from the spinner peripheral wall. A series of vertical baffles 86, positioned between the spinner peripheral wall and the vertical interior wall, divide that space into a series of vertical compartments 88. Alternate compartments contain either glass A or glass B.

The spinner peripheral 64 wall is adapted with rows of orifices 90 which are positioned adjacent the radial outward end of the vertical baffle. The orifices are in the shape of a "V", with one end or leg leading into a compartment containing glass A and one leg leading into a compartment containing glass B. The flows of both glass A and glass B join and emerge from the orifice 90 as a single dual-glass primary fiber. Other spinner configurations can be used to supply dual streams of glass to the spinner orifices.

Insulation products are packaged in high compression in order to ship more insulation in a defined volume, such as a truck. At the point of installation the insulation product is unpackaged, and the product expands or recovers. The thickness to which the insulation product recovers is referred to as the recovered thickness. A specific thickness of insulating material is required to perform to a specified R value.

The ability of an insulation product to recover depends upon both the uncompressed product density and the density to which the product is compressed during packaging. Wool insulating material can be generally classified into three broad categories: light-, medium-, and heavy-density. Light-density insulation products are those with a product density within the range of 0.3 to 0.6 pcf(4.8 to 9.6 kg/m³). Medium-density insulating materials are those with a product density of from 0.6 to 0.9 pcf(9.6 to 14.4 kg/m³). Heavy-density wool insulating materials are those higher than 1.0 pcf (16 kg/m³).

The compressed density is the density to which the wool batt can be compressed for shipping while still maintaining a satisfactory recovery. If a product is compressed to too high a density, a substantial portion of the glass fibers may break. As a result, the product will not recover to a satisfactory thickness. For prior art light-density insulation products of straight fibers, the maximum practical compressed density is from about 3 to about 6 pcf (48 kg/m³ to 96 kg/m³), depending on the product density.

Light-density wool insulating materials of the present invention produce dramatically improved recovery properties. This increase in recovery ability is due to the unique shape and properties of the irregularly shaped fibers. Due to the binderless nature of the irregularly shaped glass fibers of the present invention, one would expect them to slide upon compression as do the binderless straight fibers of the prior art. However, the irregularly shaped fibers cannot slide very far because the irregular shape catches on neighboring fibers, thereby preventing significant movement. Further, there is no binder placing stress on the fibers near the intersections. Rather, the irregularly shaped fibers of the present invention twist and bend in order to relieve stress. Thus, the fibers' positions are maintained, and any available energy for recovery is stored in the fiber. This stored energy is released when the compression is removed and the fibers return to their recovered position.

The term recovery ratio in the present invention is defined as the ratio of recovered density to compressed density, after an insulation product is compressed to the compressed density, unpackaged, and allowed to recover to the recovered density, according to ASTM C167-90. For example, an insulation product compressed to a density of 6 pcf (96 kg/m³) which recovers to 0.5 pcf(8 kg/m³) has a recovery ratio of 12:1. Light-density wool batts of the present invention may be compressed to a compressed density within the range of about 6 to about 18 pcf (96 to 288 kg/m³) and recover to a recovered density of within the range of about 0.3 to about 0.6 pcf(4.8 to 9.6 kg/m³). This is a recovery ratio within the range of from 12:1 to about 50:1. Preferably, insulation products of the invention will be compressed to a compressed density within the range of from about 9 to about 18 pcf(144 to 288 kg/m³) and recover to a recovered density within the range of from about 0.3 to about 0.6 pcf(4.8 to 9.6 kg/m³). Most preferably, the light-density insulation products are compressed to a density within the range of from about 9 to about 15 pcf(144 to 240 kg/m³) and recover to a recovered density within the range of from about 0.3 to about 0.5 pcf(4.8 to 8 kg/m³).

The effect of this dramatic increase in the amount of compression that can be applied to light-density insulation products of the present invention while still maintaining a satisfactory recovered density is significant. For standard R19 insulation products, compressed density can be increased from around 4 pcf (64 kg/m³) to about 12 pcf (192 kg/m³) by employing irregularly shaped glass fibers of the present invention. This translates to around 3 times as much insulating material which can be shipped in the same volume shipping container, such as a truck or rail car. The potential savings in shipping cost is enormous. Additionally, the more highly compressed insulation products provide benefits in storage and handling for warehousing, retailing, and installing the product.

The preferred apparatus for packaging the dual-glass fibers made by the method of the invention includes precompression conveyors 112 which are gradually converging to slowly evacuate the air from the insulation product 110, as shown in Figures 6 through 9. The insulation product is rolled up on rotatably mounted mandrel 114 and opposed belts 116 and 118. The upper belt is mounted for travel around three upper belt rollers 120, 122, and 124, while the lower belt is mounted for travel around three lower belt rollers 130, 132, and 134. Upper belt roller 124 is mounted for vertical movement and can be moved vertically by the action of any suitable means, such as pneumatic cylinder 136. Similarly, lower belt roller 134 can be adapted to be moved vertically downward by pneumatic cylinder 138.

As the roll of insulation grows in size, the increased angle of wrap around the insulation roll increases the force applied to all the rollers, and therefore tends to increase the tension in the belt. The upper and lower belt rollers are mounted for movement to accommodate changes in the path of the belt, and the amount of resistance to the force applied to the upper and lower rollers is controlled by the positioning of the upper and lower rollers by pneumatic cylinders 136 and 138. The amount of resistance to movement controls the tension, and hence the pressure on the insulation material being rolled up.

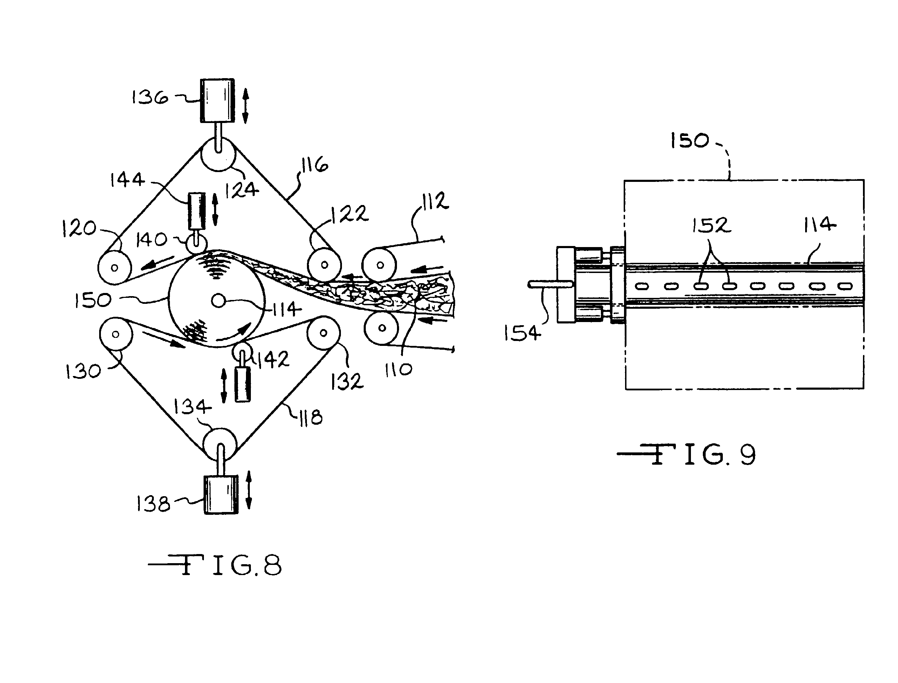

Mounted within the path of travel of the two belts are upper and lower deflector rollers 140 and 142, respectively. These are mounted for movement into and out of contact with the belts, and are adapted with pneumatic cylinders 144 and 146, respectively, for moving them into engagement with the belts. As shown in Figure 6, engagement of upper deflector roller 140 causes the upper belt to deviate from the straight path between upper belt rollers 120 and 122. Engagement of the deflector rollers also increases the tension in the belts, and also applies additional pressure on the insulation blanket being rolled up. As shown in Figure 7, this deviation in the straight line path causes the upper belt to increase the angle of wrap around insulation roll 150 (shown in Figure 8) which is being rolled up on the mandrel. Similarly, engagement of lower deflector roller 142 causes the lower belt to deviate from the straight path between lower belt rollers 130 and 132, and increases the angle of wrap around the insulation roll.

As shown in Figure 8, during the later stages of the roll-up process the upper and lower deflector rollers can be retracted out of engagement with the belts, primarily because the angle of wrap of the belts is increased by virtue of the increase in size of the roll. During the startup phase of the operation, the deflector rollers are engaged before the leading end of the insulation blanket is attached to the mandrel. Although the deflector rollers can be engaged during the entire packaging cycle, preferably the deflector rollers are disengaged after about a quarter of the insulation blanket is wound up on the mandrel.

As can be seen in Figures 7 and 8, the insulation product is sharply compressed, i.e., pressed into the insulation roll, by the action of the two deflector rollers 140 and 142. After passing the deflector rollers, the insulation product is somewhat free to partially recover or expand.

As shown in Figure 9, the mandrel can be adapted with apertures or air ports 152 which can be operatively connected to a source of vacuum or air pressure, not shown, via conduit 154. During the startup phase of the roll-up process, the air ports are preferably connected to a source of negative gauge pressure to facilitate attachment of the leading edge of the insulation blanket to the mandrel.

### Example I

A light-density insulation sample was produced from dual-glass, irregularly shaped glass fibers. The sample had the following properties:

| | |
|---|---|
| Sample size | 25 ft. x 16 x 8.75 in. (7.6 m x 406 mm x 222 mm) |
| Average fiber diameter | 29 Ht (7.3 microns) |
| Density | 0.44 pcf (7.048 kg/m³) |
| K value | 0.350 Btu in/hrft²°F (0.050 w/m.K) |

The sample was stored for about 6 weeks in an uncompressed state. The sample was then packaged by rolling up in a compression roll-up machine to a package having a diameter of 13.8 inches (351 mm) and a package density of 7.7 pcf(123.342 kg/m³). The compression roll-up machine had the characteristic of compressing the sample during each rotation of the package around a central mandrel, with shear forces being applied to the insulation material at the point of compression. The package was opened within 7 days of packaging, and based on the 6-inch (152 mm) drop test, the product had a thickness of about 9 inches (229 mm) and a product density of 0.43 pcf(6.888 kg/m³).

### Example II

A second sample of dual-glass, irregularly shaped glass fibers was produced from a different, second fiberizer, and subjected to the same packaging process and same packaging machine as described in Example I, but the packaging occurred within 5 minutes of the production of the glass fibers. Prior to packaging, the second sample had the following characteristics:

| | |
|---|---|
| Sample size | 25 ft. x 16 x 8.75 in. (7.6 m x 406 mm x 222 mm) |
| Average fiber diameter | 29 Ht (7.3 microns) |
| Density | 0.44 pcf (7.048 kg/m³) |
| K value | 0.350 Btu in/hrft²°F (0.050 w/m.K) |

The package was opened within 1 hour of packaging, and based on the 6-inch (152 mm) drop test, the product had a thickness of about 4 inches (102 mm) and a product density of 0.96 pcf (15.378 kg/m³). A visual inspection of the product showed numerous tufts of fibers, indicative of short fibers not distancing themselves from neighboring fibers. Many of the fibers appeared to be about one inch (25 mm) or less in length. Tactile handling of the fibers showed that the fibers were brashy (not readily slid against each other) to the touch.

### Example III

A third sample of dual-glass, irregularly shaped glass fibers was produced from the second fiberizer and subjected to a simple unidirectional compression process. A roll-up packaging process was not used. Before packaging, the third sample had the following characteristics:

| | |
|---|---|
| Sample size | 8 in. x 8 in. x 17.5 in. (203 mm x 203 mm x 445 mm) |
| Average fiber diameter | 29 Ht (7.3 microns) |
| Density | 0.44 pcf (7.048 kg/m³) |
| K value | 0.350 Btu in/hrft²°F (0.050 w/m.K) |

After recovery, the third sample had a recovered thickness of about 9 inches (229 mm) and a recovered density of 0.43 pcf (6.888 kg/m³) based on the 6-inch (152 mm) drop test. The recovered product attributes of the third sample nearly equaled the product attributes of the first sample.

### Example IV

Afourth sample of dual-glass, irregularly shaped glass fibers was produced from the second fiberizer, and subjected to the same packaging process and same packaging machine as described in Example II, with the packaging occurring within 5 minutes of the production of the glass fibers. During production of the glass fibers a mineral oil lubricant was sprayed into the veil of fibers, resulting in an insulation sample having 0.03 weight percent mineral oil. The mineral oil used was Emerlube 7440 from Emery Chemicals, Cincinnati, Ohio. Emerlube 7440 is a lubricant used in the manufacture of continuous textile glass fibers. Prior to packaging, the third sample had the following characteristics:

| | |
|---|---|
| Sample size | 25 ft. x 16 x 8.75 in. (7.6 m x 406 mm x 222 mm) |
| Average fiber diameter | 29 Ht (7.3 microns) |
| Density | 0.44 pcf (7.048 kg/m³) |
| K value | 0.350 Btu in/hrft²°F (0.050 w/m.K) |

The package was opened within 1 hour of packaging, and based on the 6-inch (152 mm) drop test, the product had a thickness of about 10 inches (254 mm) and a product density of 0.39 pcf (6.247 kg/m³). The results are summarized in Table I. It can be seen that the addition of the Emerlube mineral oil lubricant dramatically increased the recovery of the insulation product of the fourth sample. A visual inspection of the fourth sample, after recovery, indicated that the fibers were long, with nearly all of the fibers appearing to be at least several inches (mm) long. The insulation product also appeared to have uniform volume filling properties, with the fibers being uniformly distributed within the insulation product, with good separation between adjacent fibers. From a tactile perspective, the fibers were not brashy, but rather silky.

By comparing the results of Examples II and IV, it can be seen that the application of the lubricant in Example IV was in an amount sufficient to reduce the recovered density from a level of 0.96 pcf(15.378 kg/m³) to level of 0.39 pcf (6.247 kg/m³). According to the method of this invention, the lubricant is applied in an amount sufficient to reduce the recovered density to a density at least 20 percent lower than the recovered density of the product with no lubricant applied. Preferably, the lubricant is applied to the dual-glass fibers in an amount sufficient to reduce the recovered density to a density at least 30 percent lower than the recovered density of the product with no lubricant applied. In some cases the improvement in recovered density will be at least 40 percent. Using the data in Examples II and IV, the recovered density was reduced from 0.96 pcf(15.378 kg/m³) to 0.39 pcf (6.247 kg/m³), a reduction of 59 percent.

### Example V

Various other lubricants were applied to dual-glass, irregularly shaped glass fibers (29 Ht [7.3 microns] average diameter) produced on the second fiberizer and packaged in the same manner as in Example IV to produce samples 5 through 7. The recovery and product results are shown in Table I.

K-12 used in Sample 5 is a lubricant used during the manufacture of continuous textile glass fibers, and is a fatty acid amide made by combining tetraethylenepentamine with stearic acid.

EM-SORB 6900 is an emulsifier used in the food industry, and is manufactured by Henkel Corporation, Ambler, Pennsylvania.

Dissolved Ivory bar soap is a common soap.

**Table I**

| Recovery Testing of Insulation Samples | | | |
|---|---|---|---|
| Sample and Lubricant | Amount of Lubricant (Wt %) | Recovered Thickness Inches (mm) | Recovered Density pcf(kg/m³) |
| 2 (no lubricant) | -0- | 4 | 0.96 |
| 3 (no roll-up) | -0- | 9 | 0.43 |
| 4 (Emerlube 7440) | 0.03 | 10 | 0.39 |
| 5 (K-12) | 0.02 | 6 | 0.65 |
| 6 (M-SORB) | 0.08 | 10 | 0.39 |
| 7 (Ivory soap) | 0.07 | 10 | 0.39 |

### Example VI

A sample was produced according to the procedure in Example III, but with 0.2 weight percent Emerlube 7440. The resulting insulation product was too slippery, and as a result of the excessive lubricity was not capable of being rolled up in the roll-up machine.

It will be evident from the foregoing that various modifications can be made to this invention. Such, however, are considered as being within the scope of the invention.

The invention can be useful in the packaging of insulation materials used for thermal and acoustical insulation.

## Claims

1. The method for making dual-glass fiber products (48,110) comprising supplying a spinner (60) with two streams (78,80) of molten mineral material (A,B) of distinct compositions, centrifuging dual-glass fibers (68) from the spinner, applying a lubricant (77) to the dual-glass fibers, collecting the dual-glass fibers as a dual-glass fiber product (30,48,110), and packaging the dual-glass fiber product, the packaging step comprising rolling the dual-glass fiber product into a rolled package (150) and the rolling step causing a repeated compression and release of portions of the dual-glass fiber product.

2. A method according to claim 1, wherein the dual-glass fiber product (30,48,110) has a density less then 0.6 pcf (9.6 kg/m³) priorto being packaged and wherein the dual-glass fiber product when released from the rolled package (150) is capable of recovering to a density at least 20% lower than a density greater than 0.6 pcf (9.6 kg/m³) for a comparable dual-glass fiber product bearing no lubricant.

3. A method according to claim 2, wherein the dual-glass fiber product (30,48,110) is capable of recovering to a density at least 30% lower than a density greater than 0.6 pcf (9.6 kg/m³) for a comparable product bearing no lubricant.

4. A method according to any one of claims 1 to 3, wherein the lubricant (77) is applied in an amount of 0.01 to 1.5 percent, based on the weight of the fibers and lubricant.

5. A method according to claim 4, wherein the lubricant (77) is applied in an amount of 0.01 to 0.7 percent, based on the weight of the fibers and lubricant.

6. A method according to any one of claims 1 to 5, wherein the rolled package (150) has a compressed density of 6 to 18 pcf (96 to 288 kg/m³) and wherein the dual-glass fiber product (30,48,110) is capable of recovering to a density of 0.3 to 0.6 pcf (4.8 to 9.6 kg/m³) when released from the rolled package.

7. A method according to claim 6, wherein the rolled package (150) has a compressed density of 9 to 18 pcf (144 to 288 kg/m³) and wherein the dual-glass fiber product (30,48,110) is capable of recovering to a density of 0.3 to about 0.6 pcf (4.8 to 9.6 kg/m³) when released from the rolled package.

8. A method according to any one of claims 1 to 7, wherein the lubricant (77) is a mineral oil.

9. A method according to any one of claims 1 to 8 carried out in the absence of a step for applying a binder to the fibers.
